# EUROPEAN PATENT APPLICATION

(11) **EP 4 778 753 A1**
(43) Date of publication of application: **22.07.2026**
(21) Application number: 24864296.9
(22) Date of filing: 29.07.2024
(51) Int. Cl.: B60K 6/36, B60K 6/26, B60W 20/14, B60W 20/15

(54) **HYBRID POWER DRIVE SYSTEM, VEHICLE AND DRIVE SYSTEM CONTROL METHOD**

(30) Priority: 14.09.2023 CN 202311187233; 14.09.2023 CN 202322501070 U
(71) Applicant: Guangzhou Automobile Group Co., Ltd., Guangzhou, Guangdong 511434 (CN)
(72) Inventor: HUANG, He, Guangzhou, Guangdong 511434 (CN); SHI, Xinglei, Guangzhou, Guangdong 511434 (CN); TAI, Changning, Guangzhou, Guangdong 511434 (CN); LING, Xiaoming, Guangzhou, Guangdong 511434 (CN); ZHANG, Anwei, Guangzhou, Guangdong 511434 (CN); GUAN, Jiajing, Guangzhou, Guangdong 511434 (CN)
(74) Representative: Metida
(86) International application number: PCT/CN2024/108146
(87) International publication number: WO 2025/055573

(57) **Abstract**

The present application relates to a hybrid drive system, a vehicle and a drive system control method. The hybrid drive system includes an engine, a first motor, a first engagement/disengagement device, a planet gear mechanism, a second motor, a first shaft, a second shaft, an intermediate shaft, an intermediate shaft gear, a main reducer driving gear, a main reducer driven gear, a motor drive gear, a parking gear and a differential. The vehicle is parked by locking the parking gear. The planet gear mechanism includes a sun gear, planet gears, a planet carrier and a gear ring. The first shaft is connected between a rotor of the first motor and the sun gear, the engine is connected to the planet carrier, and the gear ring is provided with an external gear of the gear ring meshed with the intermediate shaft gear. The first engagement/disengagement device is connected between the sun gear and a stationary component for selectively engaging/disengaging the sun gear with/from the stationary component. The hybrid drive system can reduce EPB wear, thereby eliminating potential safety hazards of vehicle braking.

## Description

The present application claims the priority of the Chinese patent application, with invention name "HYBRID DRIVE SYSTEM AND VEHICLE" submitted to the China National Intellectual Property Administration on September 14, 2023, application No. 202322501070.2, and the Chinese patent application with invention name "HYBRID DRIVE SYSTEM, VEHICLE AND DRIVE SYSTEM CONTROL METHOD" submitted to the China National Intellectual Property Administration on September 14, 2023, application No. 202311187233.2, the entire contents of which are incorporated herein by reference.

### TECHNICAL FIELD

The present application relates to the field of hybrid technology, in particular, to a hybrid drive system, a vehicle and a drive system control method.

### BACKGROUND

Currently, the drive systems of hybrid vehicles mainly include three basic forms, i.e. series hybrid, parallel hybrid, and combined hybrid drive systems. For the series hybrid drive system, there is no mechanical connection between an engine and an output shaft, which enables optimized control of rotational speed/torque, but all its energy must undergo two conversions between mechanical power and electric power before being transferred to the output shaft, resulting in significant energy loss. For the parallel hybrid drive system, the transmission efficiency is high, but there is a mechanical connection between an engine and an output shaft, which cannot guarantee that the engine is always in an optimal operating range, thereby being typically used in medium- to high-speed driving conditions of vehicles. The combined hybrid drive system combines the advantages of the series hybrid drive system and the parallel hybrid drive system, enabling both optimized control of the engine and efficient control under medium- and high-speed operating conditions.

Combined hybrid is further divided into series-parallel hybrid and power-split hybrid. Among power-split hybrid structures, a single-stage input-type power-split hybrid structure is the simplest and most widely used, with Toyota leading the way by mass-installing it in automobiles in 1997.

However, an existing power-split hybrid system has the following problems that: in a parking mode, there is a need for a drive motor to torque-couple a generator to generate electric power, and the drive motor consumes energy and is prone to stalling, causing overheating demagnetization failure of the drive motor. In addition, forcibly enabling the parking power generation function requires frequent activation of an Electrical Park Brake (EPB), accelerating EPB wear and thus creating potential safety hazards of vehicle braking.

### SUMMARY

The present application provides a hybrid drive system, a vehicle and a drive system control method to solve the technical problems that: for an existing power-split hybrid system, in a parking mode, there is need for a drive motor to torque-couple a generator to generate electric power, and the drive motor consumes energy and is prone to stalling, causing overheating demagnetization failure of the drive motor.

To solve the above-mentioned technical problems, in one aspect, an embodiment of the present application provides a hybrid power drive system, which includes: an engine, a first motor, a first engagement/disengagement device, a planet gear mechanism, a second motor, a first shaft, a second shaft, an intermediate shaft, an intermediate shaft gear, a main reducer driving gear, a main reducer driven gear, a motor drive gear, a parking gear and a differential, wherein the intermediate shaft gear and the main reducer driving gear are disposed on the intermediate shaft, the main reducer driven gear is disposed on a housing of the differential and is meshed with the main reducer driving gear, the motor drive gear and the parking gear are disposed on the second shaft, the motor drive gear is meshed with the intermediate shaft gear, and one end of the second shaft is connected to a rotor of the second motor; and a vehicle is parked by locking the parking gear;
the planet gear mechanism includes a sun gear, planet gears, a planet carrier and a gear ring, wherein the first shaft is connected between a rotor of the first motor and the sun gear, the engine is connected to the planet carrier, and the gear ring is provided with an external gear of the gear ring meshed with the intermediate shaft gear; and
the first engagement/disengagement device is connected between the sun gear and a stationary component for selectively engaging/disengaging the sun gear with/from the stationary component.

In another aspect, an embodiment of the present application further provides a vehicle, which includes the above-mentioned hybrid drive system.

In accordance with the hybrid drive system and vehicle in an embodiment of the present application, the motor drive gear and the parking gear are disposed on the second shaft connected to the rotor of the second motor, the motor drive gear is meshed with the intermediate shaft gear disposed on the intermediate shaft, and the vehicle is parked by locking the parking gear. In this way, since the motor drive gear is connected to the rotor of the second motor, and the intermediate shaft gear meshed with the motor drive gear is disposed on the intermediate shaft, with the help of a large speed ratio of a gear pair consisting of the motor drive gear and the intermediate shaft gear, only a small torque is needed to lock the vehicle when the vehicle is parked, such that parking power generation may be achieved without energy consumption, and there is no need for the second motor (drive motor) to torque-couple the first motor (generator) to generate electric power, thereby avoiding overheating demagnetization failure of the second motor caused by energy consumption and stalling of the second motor, also avoiding the problem of frequent activation of the EPB required to forcibly enable the parking power generation function, reducing EPB wear and thus eliminating potential safety hazards of vehicle braking.

In yet another aspect, an embodiment of the present application further provides a drive system control method, based on the above-mentioned hybrid drive system, which includes:
establishing an operating mode layering distribution model of the hybrid drive system, wherein the hybrid drive system at least has a pure electric drive mode, a power split mode, a parallel hybrid mode and an engine direct drive mode; and
performing switching between the pure electric drive mode, the power split mode, the parallel hybrid mode and the engine direct drive mode according to the operating mode layering distribution model.

### BRIEF DESCRIPTION OF THE DRAWINGS

Ordinary technicians can obtain other drawings based on these drawings without any creative effort.
FIG. 1 is a simplified structural diagram of a hybrid rive system provided in a first embodiment of the present application;
FIG. 2 is a simplified structural diagram of a hybrid drive system provided in a second embodiment of the present application;
FIG. 3 is a framework diagram of a drive system control method provided in a third embodiment of the present application;
FIG. 4 is a diagram showing state control requirements for a battery SOC of the drive system control method provided in the third embodiment of the present application;
FIG. 5 is a diagram of an operating mode layering distribution model of the drive system control method provided in the third embodiment of the present application;
FIG. 6 is a distribution diagram of a first layer of the operating mode layering distribution model of the drive system control method provided in the third embodiment of the present application;
FIG. 7 is a distribution diagram of a second layer of the operating mode layering distribution model of the drive system control method provided in the third embodiment of the present application;
FIG. 8 is a simplified structural diagram of a hybrid drive system provided in a fourth embodiment of the present application;
FIG. 9 is a diagram of an operating mode layering distribution model of a drive system control method provided in a fifth embodiment of the present application;
FIG. 10 is a distribution diagram of a first layer of the operating mode layering distribution model of the drive system control method provided in the fifth embodiment of the present application;
FIG. 11 is a distribution diagram of a second layer of the operating mode layering distribution model of the drive system control method provided in the fifth embodiment of the present application; and
FIG. 12 is a distribution diagram of a third layer of the operating mode layering distribution model of the drive system control method provided in the fifth embodiment of the present application.

The reference numerals in the drawings in the specification are as follows:
1. Engine; 2. First Motor; 3. First Engagement/Disengagement Device; 4. Planet Gear Mechanism; 41. Sun Gear; 42. Planet Gear; 43. Planet Carrier; 44. Gear Ring; 5. Second Motor; 6. First Shaft; 61. First Shaft Segment; 62. Second Shaft Segment; 7. Second Shaft; 8. Intermediate Shaft; 9. Intermediate Shaft Gear; 10. Main Reducer Driving Gear; 20. Main Reducer Driven Gear; 30. Motor Drive Gear; 40. Parking Gear; 50. Differential; 60. External Gear of Gear Ring; 70. Second Engagement/Disengagement Device; 80. Third Engagement/Disengagement Device.

### DETAILED DESCRIPTION

Various exemplary embodiments, features, and aspects of the present application will be described in detail below with reference to the accompanying drawings. In addition, numerous specific details are set forth in the detailed embodiments below in order to better illustrate the present application. It should be understood by those skilled in the art that the present application can be implemented even without certain specific details. In some instances, means well known to those skilled in the art are not described in detail so as to highlight the subject matter of the present application.

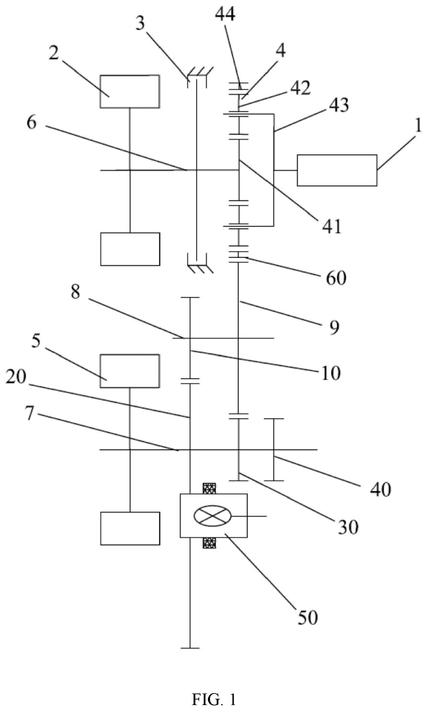

Referring to FIG. 1, one embodiment of the present application proposes a hybrid drive system, which includes: an engine, a first motor, a first engagement/disengagement device, a planet gear mechanism, a second motor, a first shaft, a second shaft, an intermediate shaft, an intermediate shaft gear, a main reducer driving gear, a main reducer driven gear, a motor drive gear, a parking gear and a differential, wherein the intermediate shaft gear and the main reducer driving gear are disposed on the intermediate shaft, the main reducer driven gear is disposed on a housing of the differential and is meshed with the main reducer driving gear, the motor drive gear and the parking gear are disposed on the second shaft, the motor drive gear is meshed with the intermediate shaft gear, and one end of the second shaft is connected to a rotor of the second motor; and a vehicle is parked by locking the parking gear; the planet gear mechanism includes a sun gear, planet gears, a planet carrier and a gear ring, wherein the first shaft is connected between a rotor of the first motor and the sun gear, the engine is connected to the planet carrier, and the gear ring is provided with an external gear of the gear ring meshed with the intermediate shaft gear; and the first engagement/disengagement device is connected between the sun gear and a stationary component for selectively engaging/disengaging the sun gear with/from the stationary component.

In some embodiments, the stationary component is a housing of the first motor.

In some other embodiments, the stationary component is a housing of the planet gear mechanism.

In some other embodiments, the stationary component may also be other relatively stationary component on a vehicle body.

In some embodiments, the first shaft, the second shaft and the intermediate axis are arranged parallel one another at intervals. In this way, the axial length of the hybrid drive system is shortened, favoring the arrangement of the overall vehicle.

In some embodiments, the first motor and the engine are located on opposite axial sides of the first shaft, and the second motor and the first motor are located on the same axial side of the first shaft. In this way, the engine and the two motors are located on opposite sides of the hybrid drive system respectively, making the arrangement more compact, and the two motors are located on the same side, favoring the arrangement of a motor controller, and reducing the length of a motor wiring harness.

In some embodiments, the first motor, the first engagement/disengagement device, the planet gear mechanism and the engine are arranged sequentially in an axial direction of the first shaft. In this way, the structural arrangement is compact, favoring the arrangement of the overall vehicle.

In some embodiments, the second motor, the motor drive gear and the parking gear are arranged sequentially in an axial direction of the second shaft. In this way, the structural arrangement is compact, favoring the arrangement of the overall vehicle.

In some embodiments, a diameter of the motor drive gear is less than a diameter of the intermediate shaft gear; and a diameter of the external gear of the gear ring is less than the diameter of the intermediate shaft gear. That is, the diameter of the intermediate shaft gear is greater than that of the motor drive gear and that of the external gear of the gear ring. In this way, the output power of the second motor undergoes speed-reduction transmission through the motor drive gear and the intermediate shaft gear, and the power output by the gear ring undergoes speed-reduction transmission through the external gear of the gear ring and the intermediate shaft gear.

In some embodiments, a first end of the first engagement/disengagement device is connected to the stationary component, and a second end of the first engagement/disengagement device is connected to the first shaft. Thus, the first engagement/disengagement device is entirely located between the stationary component and the first shaft, resulting in a more compact arrangement of the first engagement/disengagement device without occupying too much space.

One of the first end and the second end of the first engagement/disengagement device is a driving end (the end driven by an actuator), and the other is a driven end.

In some embodiments, the hybrid drive system further includes a damping element connected between the engine and the planet carrier, the damping element being a single-mass flywheel, a dual-mass flywheel, a torsion damper, or a hydraulic torque converter. The damping element can absorb engine vibrations and improve the driving experience.

In some embodiments, the first engagement/disengagement device is a clutch, a synchronizer, or a brake.

In some embodiments, the clutch is a wet multi-plate clutch. The wet multi-plate clutch is more reliable than a dry clutch.

In some embodiments, the hybrid drive system has a pure electric drive mode, a power split mode, a parallel hybrid mode, an engine direct drive mode, and a parking power generation mode, where: in response to the first engagement/disengagement device being disengaged, the second motor being driven, and the engine and the first motor being not operated, the hybrid drive system enters the pure electric drive mode; in response to the first engagement/disengagement device being disengaged, the engine driving the first motor to generate electric power while being driven, the electric power generated by the first motor being fully or partially provided to the second motor, and the second motor being driven, the hybrid drive system enters the power split mode; in response to the first engagement/disengagement device being engaged, the engine being driven, the second motor being driven or generating electric power, and the first motor being not operated, the hybrid drive system enters the parallel hybrid mode; in response to the first engagement/disengagement device being engaged, the engine being driven, the first motor being not operated, and the second motor idling, the hybrid drive system enters the engine direct drive mode; and when the vehicle is parked, in response to the parking gear being locked, the first engagement/disengagement device being disengaged, the second motor being not operated, and the engine driving the first motor to generate electric power, the hybrid drive system enters the parking power generation mode.

By controlling the operating states of the engine, the first motor and the second motor and selectively engaging or disengaging the first engagement/disengagement device, multiple drive modes including the pure electric drive mode, power split mode, parallel hybrid mode, engine direct drive mode, and parking power generation mode may be achieved. The input-type power split mode is the optimal hybrid configuration for the single-stage power split mode, and is most efficient, especially in medium and low-speed ranges. The system may be switched to the input-type power split mode if having insufficient power after being started in the pure electric mode.

In some embodiments, the parallel hybrid mode includes a parallel assist mode and a parallel power generation mode, where: in response to the first engagement/disengagement device being engaged, the engine being driven, the second motor being driven, and the first motor being not operated, the hybrid drive system enters the parallel assist mode; and in response to the first engagement/disengagement device being engaged, the engine being driven, the second motor generating electric power, and the first motor being not operated, the hybrid drive system enters the parallel power generation mode.

In some embodiments, the hybrid drive system has a braking energy recovery mode in the pure electric drive mode, a braking energy recovery mode in the power split mode, a braking energy recovery mode in the parallel hybrid mode, and a braking energy recovery mode in the engine direct drive mode, where: when the vehicle is braked in the pure electric drive mode, in response to the first engagement/disengagement device being disengaged, the second motor being subjected to reverse torque to decelerate and generate electric power, and the engine and the first motor being not operated, the hybrid drive system enters the braking energy recovery mode in the pure electric drive mode; when the vehicle is braked in the power split mode, in response to the first engagement/disengagement device being disengaged, the second motor being subjected to reverse torque to decelerate and generate electric power, and the engine driving the first motor to generate electric power while being driven, the hybrid drive system enters the braking energy recovery mode in the power split mode; when the vehicle is braked in the parallel hybrid mode, in response to the first engagement/disengagement device being engaged, the second motor being subjected to reverse torque to decelerate and generate electric power, the engine being driven, and the first motor being not operated, the hybrid drive system enters the braking energy recovery mode in the parallel hybrid mode; and when the vehicle is braked in the engine direct drive mode, in response to the first engagement/disengagement device being engaged, the second motor being subjected to reverse torque to decelerate and generate electric power, the engine being driven, and the first motor being not operated, the hybrid drive system enters the braking energy recovery mode in the engine direct drive mode.

In this way, each drive mode has a corresponding braking energy recovery mode, and efficient braking energy recovery can be achieved in each mode utilizing the second motor. In another embodiment, the hybrid drive system further includes a second engagement/disengagement device, wherein the first shaft includes a first shaft segment and a second shaft segment that are coaxial and spaced apart from each other, the first end of the first engagement/disengagement device is connected to the stationary component, one end of the first shaft segment is connected to the rotor of the first motor, the second engagement/disengagement device is connected between the other end of the first shaft segment and the second end of the first engagement/disengagement device, and the second shaft segment is connected between the second end of the first engagement/disengagement device and the sun gear.

The engagement/disengagement of the second engagement/disengagement device enables the power connection/disconnection between the first motor and the sun gear. In this way, when the second motor is started in the pure electric mode, by disengaging the second engagement/disengagement device, the first motor is disconnected from the sun gear, and the load on the sun gear is made to be zero, to prevent the second motor from reversely dragging the engine and the first motor in the pure electric drive mode, improve system operating efficiency, and increase the cruising range of electric vehicles (especially PHEV models).

The degree of freedom of the gear ring can be eliminated by means of the torque-coupling effects of the second motor and the parking gear. The second engagement/disengagement device may be selectively engaged, and the engine may be quickly restarted by the first motor.

In an embodiment having a first engagement/disengagement device and a second engagement/disengagement device, the hybrid drive system has a pure electric drive mode, a power split mode, a parallel hybrid mode, an engine direct drive mode, and a parking power generation mode, where: in response to the first engagement/disengagement device being disengaged, the second engagement/disengagement device being disengaged, the second motor being driven, and the engine and the first motor being not operated, the hybrid drive system enters the pure electric drive mode; in response to the first engagement/disengagement device being disengaged, the second engagement/disengagement device being engaged, the engine driving the first motor to generate electric power while being driven, the electric power generated by the first motor being fully or partially provided to the second motor, and the second motor being driven, the hybrid drive system enters the power split mode; in response to the first engagement/disengagement device being engaged, the second engagement/disengagement device being disengaged, the engine being driven, the second motor being driven or generating electric power, and the first motor being not operated, the hybrid drive system enters the parallel hybrid mode; in response to the first engagement/disengagement device being engaged, the second engagement/disengagement device being disengaged, the engine being driven, the first motor being not operated, and the second motor idling, the hybrid drive system enters the engine direct drive mode; and when the vehicle is parked, in response to the parking gear being locked, the first engagement/disengagement device being disengaged, the second engagement/disengagement device being engaged, the second motor being not operated, and the engine driving the first motor to generate electric power, the hybrid drive system enters the parking power generation mode.

In an embodiment having a first engagement/disengagement device and a second engagement/disengagement device, the parallel hybrid mode includes a parallel assist mode and a parallel power generation mode, where: in response to the first engagement/disengagement device being engaged, the second engagement/disengagement device being disengaged, the engine being driven, the second motor being driven, and the first motor being not operated, the hybrid drive system enters the parallel assist mode; and in response to the first engagement/disengagement device being engaged, the second engagement/disengagement device being disengaged, the engine being driven, the second motor generating electric power, and the first motor being not operated, the hybrid drive system enters the parallel power generation mode.

In an embodiment having a first engagement/disengagement device and a second engagement/disengagement device, the hybrid drive system has a braking energy recovery mode in the pure electric drive mode, a braking energy recovery mode in the power split mode, a braking energy recovery mode in the parallel hybrid mode, and a braking energy recovery mode in the engine direct drive mode, where: when the vehicle is braked in the pure electric drive mode, in response to the first engagement/disengagement device being disengaged, the second engagement/disengagement device being disengaged, the second motor being subjected to reverse torque to decelerate and generate electric power, and the engine and the first motor being not operated, the hybrid drive system enters the braking energy recovery mode in the pure electric drive mode; when the vehicle is braked in the power split mode, in response to the first engagement/disengagement device being disengaged, the second engagement/disengagement device being engaged, the second motor being subjected to reverse torque to decelerate and generate electric power, and the engine driving the first motor to generate electric power while being driven, the hybrid drive system enters the braking energy recovery mode in the power split mode; when the vehicle is braked in the parallel hybrid mode, in response to the first engagement/disengagement device being engaged, the second engagement/disengagement device being disengaged, the second motor being subjected to reverse torque to decelerate and generate electric power, the engine being driven, and the first motor being not operated, the hybrid drive system enters the braking energy recovery mode in the parallel hybrid mode; and when the vehicle is braked in the engine direct drive mode, in response to the first engagement/disengagement device being engaged, the second engagement/disengagement device being disengaged, the second motor being subjected to reverse torque to decelerate and generate electric power, the engine being driven, and the first motor being not operated, the hybrid drive system enters the braking energy recovery mode in the engine direct drive mode.

In some embodiments, the hybrid drive system further includes a third engagement/disengagement device, wherein the third engagement/disengagement device is connected between the second end of the first engagement/disengagement device and the planet carrier. In this embodiment, a second engagement/disengagement device is not included.

In an embodiment having a first engagement/disengagement device and a third engagement/disengagement device, the hybrid drive system has a pure electric drive mode, a power split mode, a parallel hybrid 1st-gear mode, a parallel hybrid 2nd-gear mode, an engine direct drive 1st-gear mode, an engine direct drive 2nd-gear mode, and a parking power generation mode, where: in response to the first engagement/disengagement device being disengaged, the third engagement/disengagement device being disengaged, the second motor being driven, and the engine and the first motor being not operated, the hybrid drive system enters the pure electric drive mode; in response to the first engagement/disengagement device being disengaged, the third engagement/disengagement device being disengaged, the engine driving the first motor to generate electric power while being driven, the electric power generated by the first motor being fully or partially provided to the second motor, and the second motor being driven, the hybrid drive system enters the power split mode; in response to the first engagement/disengagement device being disengaged, the third engagement/disengagement device being engaged, the engine being driven, the second motor being driven or generating electric power, and the first motor being driven, generating electric power or idling, the hybrid drive system enters the parallel hybrid 1st-gear mode; in response to the first engagement/disengagement device being engaged, the third engagement/disengagement device being disengaged, the engine being driven, the second motor being driven or generating electric power, and the first motor being not operated, the hybrid drive system enters the parallel hybrid 2nd-gear mode; in response to the first engagement/disengagement device being disengaged, the third engagement/disengagement device being engaged, the engine being driven, the first motor idling, and the second motor idling, the hybrid drive system enters the engine direct drive 1st-gear mode; in response to the first engagement/disengagement device being engaged, the third engagement/disengagement device being disengaged, the engine being driven, the first motor being not operated, and the second motor idling, the hybrid drive system enters the engine direct drive 2nd-gear mode; and when the vehicle is parked, in response to the parking gear being locked, the first engagement/disengagement device being disengaged, the third engagement/disengagement device being disengaged, the second motor being not operated, and the engine driving the first motor to generate electric power, the hybrid drive system enters the parking power generation mode.

In an embodiment having a first engagement/disengagement device and a third engagement/disengagement device, the parallel hybrid mode includes a parallel 1st-gear assist mode, a parallel 1st-gear power generation mode, a parallel 2nd-gear assist mode, and a parallel 2nd-gear power generation mode, where: in response to the first engagement/disengagement device being disengaged, the third engagement/disengagement device being engaged, the engine being driven, the second motor being driven, and the first motor being driven, generating electric power or idling, the hybrid drive system enters the parallel 1st-gear assist mode; in response to the first engagement/disengagement device being disengaged, the third engagement/disengagement device being engaged, the engine being driven, the second motor generating electric power, and the first motor being driven, generating electric power or idling, the hybrid drive system enters the parallel 1st-gear power generation mode; in response to the first engagement/disengagement device being engaged, the third engagement/disengagement device being disengaged, the engine being driven, the second motor being driven, and the first motor being not operated, the hybrid drive system enters the parallel 2nd-gear assist mode; and in response to the first engagement/disengagement device being engaged, the third engagement/disengagement device being disengaged, the engine being driven, the second motor generating electric power, and the first motor being not operated, the hybrid drive system enters parallel 2nd-gear power generation mode.

In an embodiment having a first engagement/disengagement device and a third engagement/disengagement device, the hybrid drive system has a braking energy recovery mode in the pure electric drive mode, a braking energy recovery mode in the power split mode, a braking energy recovery mode in the parallel hybrid 1st-gear mode, a braking energy recovery mode in the parallel hybrid 2nd-gear mode, a braking energy recovery mode in the engine direct drive 1st-gear mode, and a braking energy recovery mode in the engine direct drive 2nd-gear mode, where: when the vehicle is braked in the pure electric drive mode, in response to the first engagement/disengagement device being disengaged, the third engagement/disengagement device being disengaged, the second motor being subjected to reverse torque to decelerate and generate electric power, and the engine and the first motor being not operated, the hybrid drive system enters the braking energy recovery mode in the pure electric drive mode; when the vehicle is braked in the power split mode, in response to the first engagement/disengagement device being disengaged, the third engagement/disengagement device being disengaged, the second motor being subjected to reverse torque to decelerate and generate electric power, and the engine driving the first motor to generate electric power while being driven, the hybrid drive system enters the braking energy recovery mode in the power split mode; when the vehicle is braked in the parallel hybrid 1st-gear mode, in response to the first engagement/disengagement device being disengaged, the third engagement/disengagement device being engaged, the engine being driven, the second motor being subjected to reverse torque to decelerate and generate electric power, and the first motor being driven, generating electric power or idling, the hybrid drive system enters the braking energy recovery mode in the parallel hybrid 1st-gear mode; when the vehicle is braked in the parallel hybrid 2nd-gear mode, in response to the first engagement/disengagement device being engaged, the third engagement/disengagement device being disengaged, the engine being driven, the second motor being subjected to reverse torque to decelerate and generate electric power, and the first motor being not operated, the hybrid drive system enters the braking energy recovery mode in the parallel hybrid 2nd-gear mode; when the vehicle is braked in the engine direct drive 1st-gear mode, in response to the first engagement/disengagement device being disengaged, the third engagement/disengagement device being engaged, the engine being driven, the second motor being subjected to reverse torque to decelerate and generate electric power, and the first motor generating electric power or idling, the hybrid drive system enters the braking energy recovery mode in the engine direct drive 1st-gear mode; and when the vehicle is braked in the engine direct drive 2nd-gear mode, in response to the first engagement/disengagement device being engaged, the third engagement/disengagement device being disengaged, the engine being driven, the second motor being subjected to reverse torque to decelerate and generate electric power, and the first motor being not operated, the hybrid drive system enters the braking energy recovery mode in the engine direct drive 2nd-gear mode.

In an embodiment having a first engagement/disengagement device and a third engagement/disengagement device, by controlling the operating states of the engine, the first motor and the second motor and selectively engaging or disengaging the first engagement/disengagement device and the second engagement/disengagement device, multiple drive modes including the pure electric drive mode, power split mode, parallel hybrid 1st-gear mode, parallel hybrid 2nd-gear mode, engine direct drive 1st-gear mode, engine direct drive 2nd-gear mode, and parking power generation mode may be achieved. Furthermore, in the mode wherein the engine participates in drive, the engine may have two 2-speed gears, enabling the hybrid drive system in this embodiment to be suitable for urban driving conditions and small and medium-sized vehicles, and to balance the dynamic performance and the economy of the entire vehicle.

In accordance with the hybrid drive system in the embodiment of the present application, the motor drive gear and the parking gear are disposed on the second shaft connected to the rotor of the second motor, the motor drive gear is meshed with the intermediate shaft gear disposed on the intermediate shaft, and the vehicle is parked by locking the parking gear. In this way, since the motor drive gear is connected to the rotor of the second motor, and the intermediate shaft gear meshed with the motor drive gear is disposed on the intermediate shaft, with the help of a large speed ratio of a gear pair consisting of the motor drive gear and the intermediate shaft gear, only a small torque is needed to lock the vehicle when the vehicle is parked, such that parking power generation may be achieved without energy consumption, and there is no need for the second motor (drive motor) to torque-couple the first motor (generator) to generate electric power, thereby avoiding overheating demagnetization failure of the second motor caused by energy consumption and stalling of the second motor, also avoiding the problem of frequent activation of the EPB required to forcibly enable the parking power generation function, reducing EPB wear and thus eliminating potential safety hazards of vehicle braking.

In addition, the second motor can participate in drive during mode switching, so there is no power interruption and the driving experience is good.

In addition, the first motor can increase speed and torque through the planet gear mechanism, which can effectively reduce the size of the first motor.

In addition, the hybrid drive system is compatible with both HEV and PHEV models, and features a high level of platformization.

In addition, for the hybrid drive system, each drive mode has a corresponding braking energy recovery mode, and efficient braking energy recovery can be achieved in each mode utilizing the second motor. Braking energy recovery covers all driving conditions, has high energy recovery efficiency, and can improve the endurance of the vehicle.

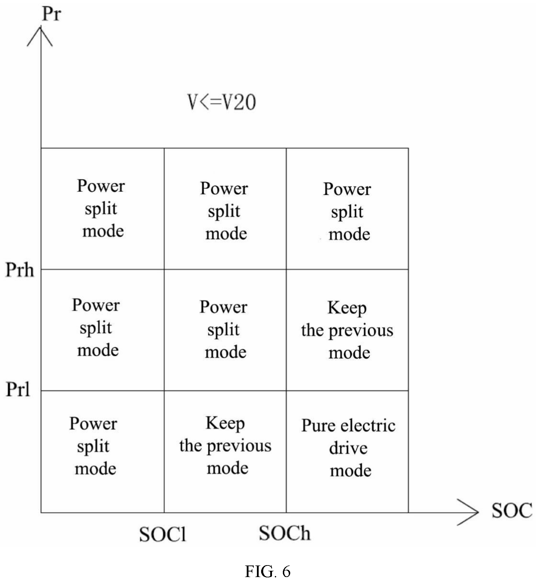

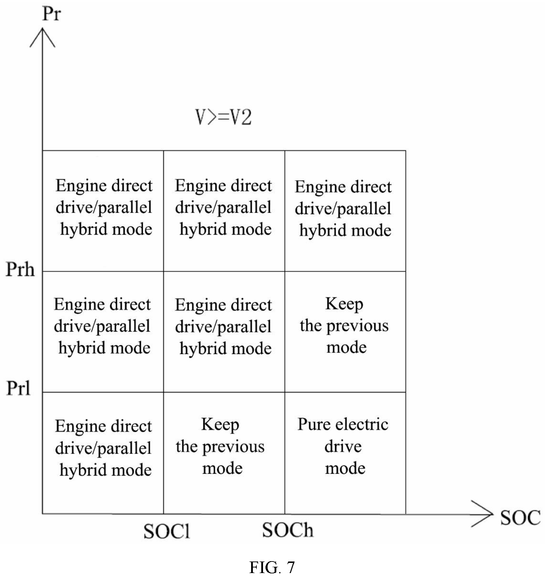

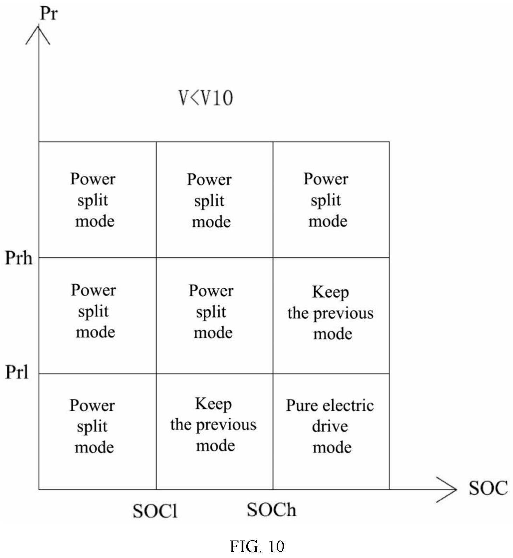

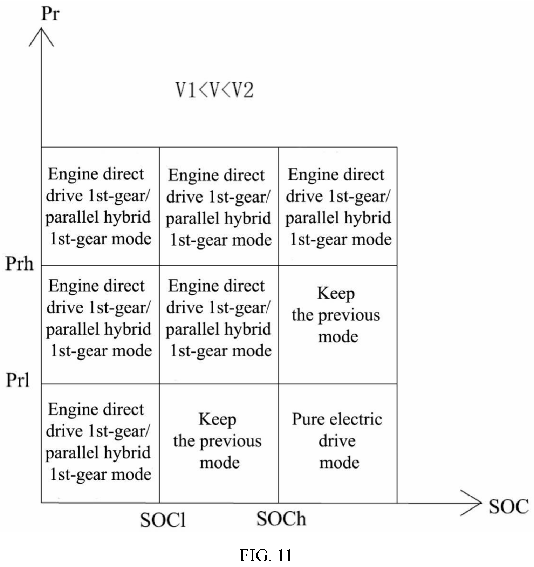

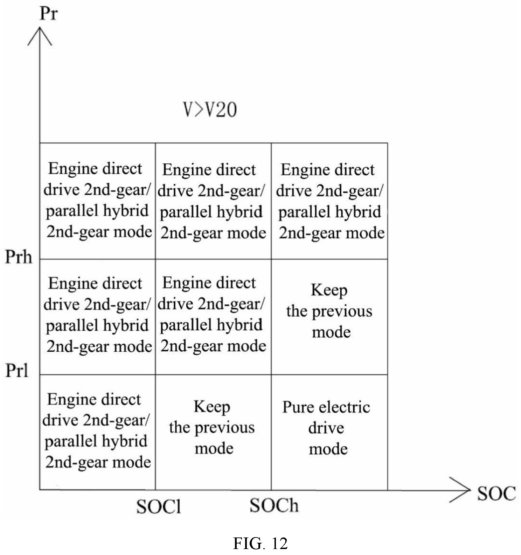

The hybrid power drive system and drive system control method provided in the embodiments of present application will be described in detail below with reference to FIGS. 1 to 12.

### First embodiment

As shown in FIG. 1, a hybrid drive system provided in a first embodiment of the present application includes an engine 1, a first motor 2, a first engagement/disengagement device 3, a planet gear mechanism 4, a second motor 5, a first shaft 6, a second shaft 7, an intermediate shaft 8, an intermediate shaft gear 9, a main reducer driving gear 10, a main reducer driven gear 20, a motor drive gear 30, a parking gear 40, and a differential 50. Both ends of the differential 20 are connected to a first half-shaft and a second half-shaft respectively, an outer end of the first half-shaft is connected to a first wheel, and an outer end of the second half-shaft is connected to a second wheel. One of the first and second wheels is a left wheel, and the other is a right wheel.

The intermediate shaft gear 9 and the main reducer driving gear 10 are disposed on the intermediate shaft 9, the intermediate shaft gear 9 is fixed (e.g., splined) on the intermediate shaft 8 or integrally formed on the intermediate shaft 8, and the main reducer driving gear 10 is fixed (e.g., splined) on the intermediate shaft 8 or integrally formed on the intermediate shaft 8.

The main reducer driven gear 20 is disposed on a housing of the differential 50 and is meshed with the main reducer driving gear 10, and the main reducer driven gear 20 is fixed (e.g., splined) or integrally formed on the housing of the differential 50.

The motor drive gear 30 and the parking gear 40 are disposed on the second shaft 7, the motor drive gear 30 is meshed with the intermediate shaft gear 9, and the motor drive gear 30 and the parking gear 40 are fixed (e.g., splined) on the second shaft 7 or integrally formed on the second shaft 7. One end of the second shaft 7 is connected to a rotor of the second motor 5; and the vehicle is parked by locking the parking gear 40, for example, the vehicle is parked by clipping a parking pawl into the parking gear 40.

The planet gear mechanism 4 includes a sun gear 41, planet gears 42, a planet carrier 43 and a gear ring 44, wherein the first shaft 6 is connected between a rotor of the first motor 2 and the sun gear 41, the engine 1 is connected to the planet carrier 43, the gear ring 44 is provided with an external gear of the gear ring 60 meshed with the intermediate shaft gear 9, and the external gear of the gear ring 60 is fixed (e.g., splined) on the gear ring 44 or integrally formed on the gear ring 44. The first engagement/disengagement device 3 is connected between the sun gear 41 and a stationary component for selectively engaging/disengaging the sun gear 41 with/from the stationary component. The first shaft 6, the second shaft 7 and the intermediate axis 8 are arranged in parallel one another at intervals. In this way, the axial length of the hybrid drive system is shortened, favoring the arrangement of the overall vehicle.

The first motor 2 and the engine 1 are located on opposite axial sides of the first shaft 6, and the second motor 5 and the first motor 2 are located on the same axial side of the first shaft 6. In this way, the engine 1 and the two motors are located on opposite sides of the hybrid drive system respectively, making the arrangement more compact, and the two motors are located on the same side, favoring the arrangement of a motor controller, and reducing the length of a motor wiring harness.

The first motor 2, the first engagement/disengagement device 3, the planet gear mechanism 4 and the engine 1 are arranged sequentially in an axial direction of the first shaft 6. In this way, the structural arrangement is compact, favoring the arrangement of the overall vehicle.

The second motor 5, the motor drive gear 30 and the parking gear 40 are arranged sequentially in an axial direction of the second shaft 7. In this way, the structural arrangement is compact, favoring the arrangement of the overall vehicle.

A diameter of the motor drive gear 30 is less than a diameter of the intermediate shaft gear 9; and a diameter of the external gear of the gear ring 60 is less than the diameter of the intermediate shaft gear 9. That is, the diameter of the intermediate shaft gear 9 is greater than that of the motor drive gear 30 and that of the external gear of the gear ring 60. In this way, the output power of the second motor 5 undergoes speed-reduction transmission through the motor drive gear 30 and the intermediate shaft gear 9, and the power output by the gear ring 44 undergoes speed-reduction transmission through the gear ring external gear 60 and the intermediate shaft gear 9.

A first end of the first engagement/disengagement device 3 is connected to the stationary component, and a second end of the first engagement/disengagement device 3 is connected to the first shaft 6. Thus, the first engagement/disengagement device 3 is entirely located between the stationary component and the first shaft 6, resulting in a more compact arrangement of the first engagement/disengagement device 3 without occupying too much space. One of the first end and the second end of the first engagement/disengagement device 3 is a driving end (the end driven by an actuator), and the other is a driven end.

In this embodiment, the first engagement/disengagement device 3 is a brake.

However, in other embodiments, the brake may be replaced with a clutch or synchronizer or other element with similar functions.

When the first engagement/disengagement device 3 is engaged, the first shaft 6, the first motor 2, and the sun gear 41 are all braked, and the power of the engine 1 may be input from the planet carrier 43 and output from the gear ring 44. When the first engagement/disengagement device 3 is disengaged, the first motor 2 is connected to the sun gear 41 by the first shaft 6. The first motor 2 can generate electric power under the drive of the engine 1, or can be driven together with the engine 1.

The hybrid drive system may further include a damping element connected between the engine 1 and the planet carrier 43, wherein the damping element is a single-mass flywheel, a dual-mass flywheel, a torsion damper, or a hydraulic torque converter.

In accordance with the hybrid drive system in the first embodiment of the present application, since the motor drive gear 30 is connected to the rotor of the second motor 5, and the intermediate shaft gear 9 meshed with the motor drive gear 30 is disposed on the intermediate shaft 8, with the help of a large speed ratio of a gear pair consisting of the motor drive gear 30 and the intermediate shaft gear 9, only a small torque is needed to lock the vehicle when the vehicle is parked, such that parking power generation may be achieved without energy consumption, and there is no need for the second motor 5 (drive motor) to torque-couple the first motor 2 (generator) to generate electric power, thereby avoiding overheating demagnetization failure of the second motor 5 caused by energy consumption and stalling of the second motor 5, also avoiding the problem of frequent activation of the EPB required to forcibly enable the parking power generation function, reducing EPB wear and thus eliminating potential safety hazards of vehicle braking.

In accordance with the hybrid drive system in the first embodiment of the present application, multiple drive modes including the pure electric drive mode, power split mode, parallel hybrid mode, engine direct drive mode and parking power generation mode may be achieved by controlling the operating states of the engine 1, the first motor 2 and the second motor 5 and selectively engaging or disengaging the first engagement/disengagement device 3.

In addition, each drive mode has a corresponding braking energy recovery mode, and efficient braking energy recovery can be achieved in each mode utilizing the second motor. The second motor 5 can participate in drive during mode switching, so there is no power interruption and the driving experience is good. The first motor 2 can increase speed and torque through the planet gear mechanism 4, which can effectively reduce the size of the first motor 2. The hybrid drive system is compatible with both HEV and PHEV models, and features a high level of platformization.

See Table 1 below for the control in each drive mode:

**Table 1**

| Drive modes | Engine | First motor | Second motor | First engagement/ disengagement device |
|---|---|---|---|---|
| Pure electric drive mode | / | / | Being driven | Being disengaged |
| Power split mode | Being driven | Generating electric power | Being driven | Being disengaged |
| Parallel hybrid mode | Being driven | / | Being driven or generating electric power | Being engaged |
| Engine direct drive mode | Being driven | / | Idling | Being engaged |
| Braking energy recovery mode in pure electric drive mode | / | / | Generating electric power | Being disengaged |
| Braking energy recovery mode in power split mode | Being driven | Generating electric power | Generating electric power | Being disengaged |
| Braking energy recovery mode in parallel hybrid mode | Being driven | / | Generating electric power | Being engaged |
| Braking energy recovery mode in engine direct drive mode | Being driven | / | Generating electric power | Being engaged |
| Parking power generation mode | Being driven | Generating electric power | / | Being disengaged |

In Table 1, "/" indicates "not operated".

The power transmission in each drive mode is as follows:

### (1) Pure electric drive mode

In response to the first engagement/disengagement device 3 being disengaged, the second motor 5 being driven, and the engine 1 and the first motor 2 being not operated, the hybrid drive system enters the pure electric drive mode. In this case, a power transmission path is as follows: Second Motor 5 - Motor Drive Gear 30 - Intermediate Shaft Gear 9 - Main Reducer Driving Gear 10 - Main Reducer Driven Gear 20 - Differential 50. This mode is mainly used for starting and low-to-medium speed driving of the vehicle.

### (3) Power split mode

In response to the first engagement/disengagement device 3 being disengaged, the engine 1 driving the first motor 2 to generate electric power while being driven, the electric power generated by the first motor 2 being fully or partially provided to the second motor 5, and the second motor 5 being driven, the hybrid drive system enters the power split mode. In this case, the power transmission path is divided into three paths. The first path is as follows: Second Motor 5 - Motor Drive Gear 30 - Intermediate Shaft Gear 9 - Main Reducer Driving Gear 10 - Main Reducer Driven Gear 20 - Differential 50; the second path is as follows: Engine 1 - Planet Carrier 43 - Planet Gears 42 - Gear Ring 44 - External Gear Of Gear Ring 60 - Intermediate Shaft Gear 9 - Main Reducer Driving Gear 10 - Main Reducer Driven Gear 20 - Differential 50; and the third path (power generation path) is as follows: Engine 1 - Planet Carrier 43 - Planet Gear 42 - Sun Gear 41 - First Motor 2. This mode is mainly used to cover low-to-medium speed operating conditions of the vehicle, and cover a high-speed operating condition exceeding a mechanical point as well. When the power is sufficient and the SOC of the battery pack is not saturated, the power passing through the first motor 2 can partially charge the battery pack. When the required power is greater than the power of the engine 1, if the SOC of the battery pack is not low, the insufficient power can also be output through the second motor 5 by discharging the battery.

### (4) Parallel hybrid mode

In response to the first engagement/disengagement device 3 being engaged, the engine 1 being driven, the second motor 5 being driven or generating electric power, and the first motor 2 being not operated, the hybrid drive system enters the parallel hybrid mode. According to the assist or drive from the second motor 5, the parallel hybrid mode can also be divided into a parallel assist mode and a parallel power generation mode. In the parallel assist mode, the power transmission path is divided into two paths. The first path is as follows: Second Motor 5 - Motor Drive Gear 30 - Intermediate Shaft Gear 9 - Main Reducer Driving Gear 10 - Main Reducer Driven Gear 20 - Differential 50; and the second path is as follows: Engine 1 - Planet carrier 43 - Planet gears 42 - Gear ring 44 - External Gear of Gear Ring 60 - Intermediate Shaft Gear 9 - Main Reducer Driving Gear 10 - Main Reducer Driven Gear 20 - Differential 50. In the parallel power generation mode, the power transmission path is divided into two paths. The first path is as follows: Engine 1 - Planet Carrier 43 - Planet Gears 42 - Gear Ring 44 - External Gear of Gear Ring 60 - Intermediate Shaft Gear 9 - Motor Drive Gear 30 - Second Motor 5; and the second path is as follows: Engine 1 - Planet Carrier 43 - Planet Gears 42 - Gear Ring 44 - External Gear of Gear Ring 60 - Intermediate Shaft Gear 9 - Main Reducer Driving Gear 10 - Main Reducer Driven Gear 20 - Differential 50. The parallel hybrid mode is mainly used for high-speed hybrid driving. Most of the power of the engine 1 is directly used for drive (without electric power conversion). Moreover, on the premise of meeting the power requirements of the entire vehicle, the first motor 2 can adjust the torque operating range of the engine 1, such that the engine 1 can achieve torque decoupling. When the SOC of the battery pack is sufficient, the engine 1 is in the optimal torque operating range, and the system operates efficiently. In the parallel assist mode, two power sources are driven (engine 1 and second motor 5), enabling the vehicle to have good power performance.

### (5) Engine direct drive mode

In response to the first engagement/disengagement device 3 being engaged, the engine 1 being driven, the first motor 2 being not operated, and the second motor 5 idling, the hybrid drive system enters the engine direct drive mode. In this case, the power transmission path is as follows: Engine 1 - Planet Carrier 43 - Planet Gears 42 - Gear Ring 44 - External Gear of Gear Ring 60 - Intermediate Shaft Gear 9 - Main Reducer Driving Gear 10 - Main Reducer Driven Gear 20 - Differential 50. This mode is mainly used for high-speed engine direct drive driving. To avoid power backflow caused by input power split, the system must be switched to this mode when the vehicle speed approaches the mechanical point. In this mode, the power of the engine is directly used for drive without electric power conversion, resulting in high system efficiency.

### (6) Parking power generation mode

When the vehicle is parked, in response to the parking gear 40 being locked, the first engagement/disengagement device 3 being disengaged, the second motor 5 being not operated, and the engine 1 driving the first motor 2 to generate electric power, the hybrid drive system enters the parking power generation mode. In this case, the power transmission path is as follows: Engine 1 - Planet Carrier 43 - Planet Gear 42 - Sun Gear 41 - First Motor 2. This mode is mainly used for parking power supply conditions such as those encountered at traffic lights.

### (7) Braking energy recovery mode in pure electric drive mode

When the vehicle is braked in the pure electric drive mode, in response to the first engagement/disengagement device 3 being disengaged, the second motor 5 being subjected to reverse torque to decelerate and generate electric power, and the engine 1 and the first motor 2 being not operated, the hybrid drive system enters the braking energy recovery mode in the pure electric drive mode. In this case, a braking energy recovery path is as follows: Wheel- Differential 50- Main Reducer Driven Gear 20 - Main Reducer Driving Gear 10 - Intermediate Shaft Gear 9 - Motor Drive Gear 30 - Second Motor 5. This mode is applied to vehicle braking energy recovery in the pure electric drive mode.

### (8) Braking energy recovery mode in power split mode

When the vehicle is braked in the power split mode, in response to the first engagement/disengagement device 3 being disengaged, the second motor 5 being subjected to reverse torque to decelerate and generate electric power, and the engine 1 driving the first motor 2 to generate electric power while being driven, the hybrid drive system enters the braking energy recovery mode in the power split mode. In this case, the braking energy recovery path is as follows: Wheel - Differential 50 - Main Reducer Driven Gear 20 - Main Reducer Driving Gear 10 - Intermediate Shaft Gear 9 - Motor Drive Gear 30 - Second Motor 5. This mode is applied to vehicle braking energy recovery in the power split mode.

### (9) Braking energy recovery mode in parallel hybrid mode

When the vehicle is braked in the parallel hybrid mode, in response to the first engagement/disengagement device 3 being engaged, the second motor 5 being subjected to reverse torque to decelerate and generate electric power, the engine 1 being driven, and the first motor 2 being not operated, the hybrid drive system enters the braking energy recovery mode in the parallel hybrid mode. In this case, the braking energy recovery path is as follows: Wheel - Differential 50-Main Reducer Driven Gear 20-Main Reducer Driving Gear 10-Intermediate Shaft Gear 9-Motor Drive Gear 30 - Second Motor 5. This mode is applied to vehicle braking energy recovery in the parallel hybrid mode.

### (10) Braking energy recovery mode in engine direct drive mode

When the vehicle is braked in the engine direct drive mode, in response to the first engagement/disengagement device 3 being engaged, the second motor 5 being subjected to reverse torque to decelerate and generate electric power, the engine 1 being driven, and the first motor 2 being not operated, the hybrid drive system enters the braking energy recovery mode in the engine direct drive mode. In this case, the braking energy recovery path is as follows: Wheel - Differential 50 - Main Reducer Driven Gear 20 - Main Reducer Driving Gear 10 - Intermediate Shaft Gear 9 - Motor Drive Gear 30 - Second Motor 5. This mode is applied to vehicle braking energy recovery in the engine direct drive mode.

### Second embodiment

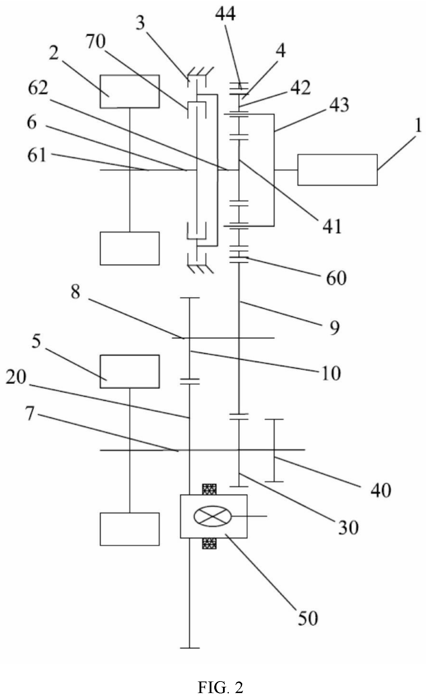

FIG. 2 shows a hybrid drive system provided in a second embodiment of the present application. The second embodiment is different from the first embodiment in that: the hybrid drive system further includes a second engagement/disengagement device 70, wherein the first shaft 6 includes a first shaft segment 61 and a second shaft segment 62 that are coaxial and spaced apart from each other, the first end of the first engagement/disengagement device 3 is connected to the stationary component, one end of the first shaft segment 61 is connected to the rotor of the first motor 2, the second engagement/disengagement device 70 is connected between the other end of the first shaft segment 61 and the second end of the first engagement/disengagement device 3, and the second shaft segment 62 is connected between the second end of the first engagement/disengagement device 3 and the sun gear 41.

The engagement/disengagement of the second engagement/disengagement device 3 enables the power connection/disconnection between the first motor 2 and the sun gear 41. In this way, in the pure electric drive mode, by disengaging the second engagement/disengagement device 70, the first motor 2 is disconnected from the sun gear 41, and the load on the sun gear is made to be zero, to prevent the second motor 5 from reversely dragging the engine 1 and the first motor 2 in the pure electric drive mode, improve system operating efficiency, and increase the cruising range of electric vehicles (especially PHEV models).

The degree of freedom of the gear ring can be eliminated by means of the torque-coupling effects of the second motor 5 and the parking gear 30. The second engagement/disengagement device 70 may be selectively engaged, and the engine 1 may be quickly restarted by the first motor 2.

The second engagement/disengagement device 70 is a clutch. Preferably, the clutch is a wet multi-plate clutch. The wet multi-plate clutch is more reliable than a dry clutch.

However, the second engagement/disengagement device 70 can also be an element with similar functions such as a synchronizer or a brake.

In this embodiment, the hybrid drive system also has a pure electric drive mode, a power split mode, a parallel hybrid mode, an engine direct drive mode, and a parking power generation mode. In addition, each drive mode has a corresponding braking energy recovery mode, and efficient braking energy recovery can be achieved in each mode utilizing the second motor.

See Table 2 below for the control in each drive mode:

**Table 2**

| Drive modes | Motor | First motor | Second motor | First engagement/ disengagement device | Second engagement/ disengagement device |
|---|---|---|---|---|---|
| Pure electric drive mode | / | / | Being driven | Being disengaged | Being disengaged |
| Power split mode | Being driven | Generating electric power | Being driven | Being disengaged | Being engaged |
| Parallel hybrid mode | Being driven | / | Being driven or generating electric power | Being engaged | Being disengaged |
| Engine direct drive mode | Being driven | / | Idling | Being engaged | Being disengaged |
| Braking energy recovery mode in pure electric drive mode | / | / | Generating electric power | Being disengaged | Being disengaged |
| Braking energy recovery mode in power split mode | Being driven | Generating electric power | Generating electric power | Being disengaged | Being engaged |
| Braking energy recovery mode in parallel hybrid mode | Being driven | / | Generating electric power | Being engaged | Being disengaged |
| Braking energy recovery mode in engine direct drive mode | Being driven | / | Generating electric power | Being engaged | Being disengaged |
| Parking power generation mode | Being driven | Generating electric power | / | Being disengaged | Being engaged |

In Table 2, "/" indicates "not operated".

In the second embodiment, the power transmission in each drive mode is similar to that in the first embodiment.

### Third embodiment

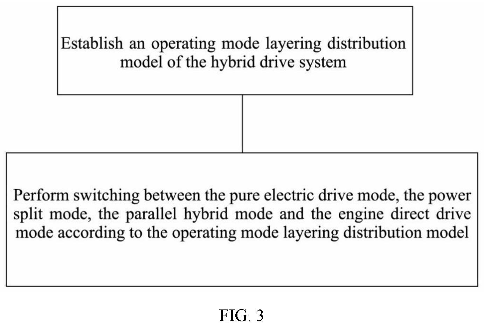

Referring to FIGS. 3 to 7, an embodiment of the present application further provides a drive system control method, based on the hybrid drive system in any one of the first and second embodiments, including:
establishing an operating mode layering distribution model of the hybrid drive system, wherein the hybrid drive system at least has a pure electric drive mode, a power split mode, a parallel hybrid mode, and an engine direct drive mode; and
performing switching between the pure electric drive mode, the power split mode, the parallel hybrid mode and the engine direct drive mode according to the operating mode layering distribution model.

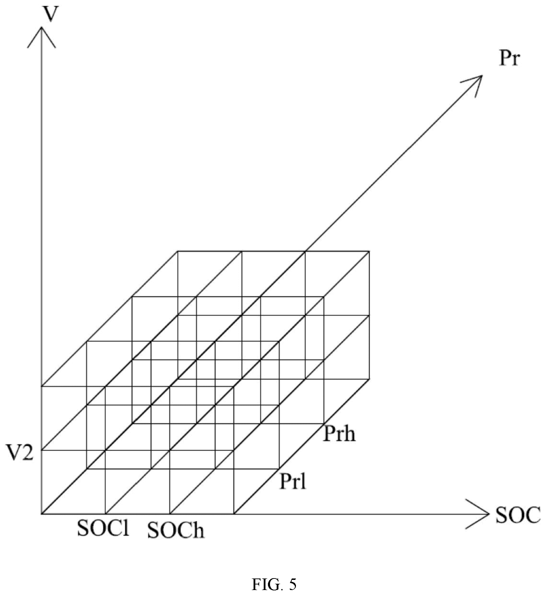

Referring to FIGS. 5 to 7, the operating mode layering distribution model has two layers. To avoid frequent mode switching between the two layers, a layering condition for the first layer and the second layer of the operating mode layering distribution model is V20 < V2; the first layer of the operating mode layering distribution model is distributed with the power split mode and the pure electric drive mode, and the second layer of the operating mode layering distribution model is distributed with the pure electric drive mode, the parallel hybrid mode and the engine direct drive mode, wherein V20 represents a first vehicle speed threshold, and V2 represents a second vehicle speed threshold. The vehicle speed thresholds are preset based on experience, and then V20 and V2 are calibrated through subsequent vehicle adjustment.

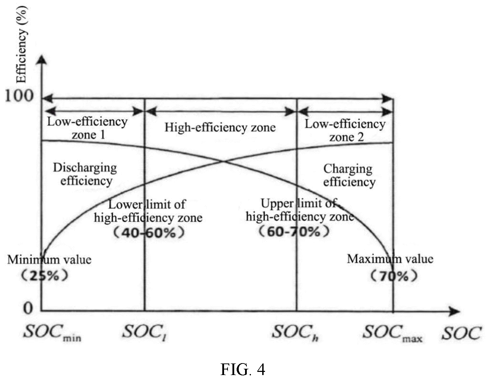

The state control requirements of the SOC of the battery pack are as shown in FIG. 4. The SOC of the battery pack should not be too high or too low. Maintaining a relative balance of SOC is very important. The drive system control method in the embodiment of the present application can maintain a relative balance of SOC, thereby ensuring that the vehicle has excellent power performance while maintaining system efficiency and thus achieving excellent fuel economy.

The method further includes:
providing a buffer zone on a switching path of each operating mode, and providing a buffer zone on an ON/OFF switching path of the engine. A certain buffer zone should be provided during operating mode switching and ON/OFF switching of the engine to avoid frequent switching of operating modes and frequent ON/OFF of the engine.

The method further includes:
monitoring an SOC of a battery pack in real time;
when the current SOC of the battery pack is higher than a set upper limit SOCh and the entire vehicle required power Pr is lower than a set lower limit Prl, controlling the engine not to operate, such that the battery pack provides electric power to the second motor alone to drive the entire vehicle to run;
when the current SOC of the battery pack is lower than a set lower limit SOCl, or the current SOC of the battery pack is between the set upper and lower limits SOCh and SOCl and the entire vehicle required power Pr is between the set upper and lower limits Prh and Prl, or the entire vehicle required power Pr is higher than the set upper limit Prh, controlling the engine to operate, such that the engine drives the entire vehicle to run as a main power source, wherein in this case, the operating parameters of the first motor and the second motor are calculated according to the formula for determining the operating parameters of all components in the power split mode, so as to determine the operating states of the two motors; and
when the current SOC of the battery pack is higher than the set upper limit SOCh and the entire vehicle required power Pr is between the set upper and lower limits Prh and Prl, or the current SOC of the battery pack is between the set upper and lower limits SOCh and SOCl and the entire vehicle required power Pr is lower than the set lower limit Prl, providing a transition zone to avoid frequent switching of operating modes and frequent ON/OFF of the engine, such that an operating mode of the hybrid drive system is kept as that of the previous moment (referred to as maintaining the previous mode).

The method further includes:
in the power split mode of the hybrid drive system, after the engine is started, when the engine required power Per is lower than the minimum power Pemin on a minimum fuel consumption line of the engine, controlling the engine to operate at a power point with the minimum power Pemin; when the engine required power Per is higher than the maximum power Pemax on the minimum fuel consumption line of the engine, controlling the engine to operate at a power point with the maximum power Pemax; and when the engine required power Per is between the maximum power Pemax and the minimum power Pemin on the minimum fuel consumption line of the engine, controlling the engine to operate on the minimum fuel consumption line of the engine, wherein the engine required power Per is equal to the entire vehicle required power Pr + loss power + accessory power.

The method further includes:
in the engine direct drive mode or the parallel hybrid mode, when the engine required power Per is lower than the minimum power Pemin on a minimum fuel consumption line of the engine, controlling the engine to operate at a power point with the minimum power Pemin; when the engine required power Per is higher than the maximum power Pemax on the minimum fuel consumption line of the engine, controlling the engine to operate at a power point with the maximum power Pemax; and when the engine required power Per is between the maximum power Pemax and the minimum power Pemin on the minimum fuel consumption line of the engine, controlling the engine to operate on a minimum fuel consumption line Peopt of the engine; and
when the engine required power Per is higher than the maximum power Pemax on the minimum fuel consumption line Peopt of the engine, and the current SOC of the battery pack is greater than the set lower limit SOCl, switching the hybrid power drive system to the parallel assist mode of the parallel hybrid mode; and when the engine required power Per is lower than the minimum power Pemin on the minimum fuel consumption line Peopt of the engine and the current SOC is less than the set upper limit SOCh, switching the hybrid power drive system to the parallel power generation mode of the parallel hybrid mode.

In the third embodiment, see Table 3 for the specific mode switching conditions:

**Table 3**

| Number | Start modes | Switching conditions | Termination modes |
|---|---|---|---|
| 1 | Pure electric drive mode | SOC < SOCl or Pr > Prh or SOCl < SOC < SOCh and Prl < Pr < Prh | Power split mode |
| 2 | Power split mode | SOC > SOCh and Pr < Prl | Pure electric drive mode |
| 3 | Engine operating lower boundary | Per > Pemax | Engine operating upper boundary |
| 4 | Engine operating upper boundary | Per < Pemin | Engine operating lower boundary |
| 5 | Engine following | Per > Pemax | Engine operating upper boundary |
| 6 | Engine operating upper boundary | Pemin < Pe < Pemax | Engine following |
| 7 | Engine operating lower boundary | Pemin < Pe < Pemax | Engine following |
| 8 | Engine following | Per < Pemin | Engine operating lower boundary |
| 17 | Power split mode | V > V2 | Engine direct drive mode / parallel hybrid mode |
| 18 | Engine direct drive/parallel hybrid mode | V < V20 | Power split mode |
| 19 | Engine direct drive mode | SOCl < SOC and Per > Peopt and Per > Pemin | Parallel assist mode |
| 20 | Parallel hybrid mode | Peopt-5%*Peopt < Per < Peopt + 5%*Peopt | Engine direct drive mode |
| 21 | Parallel assist mode | SOC < SOCh and Per < Peopt | Parallel power generation mode |
| 22 | Parallel power generation mode | SOCl < SOC and Per > Peopt and Per > Pemin | Parallel assist mode |
| 23 | Engine direct drive mode | SOC < SOCh and Per < Peopt | Parallel power generation mode |
| 24 | Parallel power generation mode | Peopt-5%*Peopt < Per < Peopt + 5%*Peopt or SOC > SOCh | Engine direct drive mode |

### Fourth embodiment

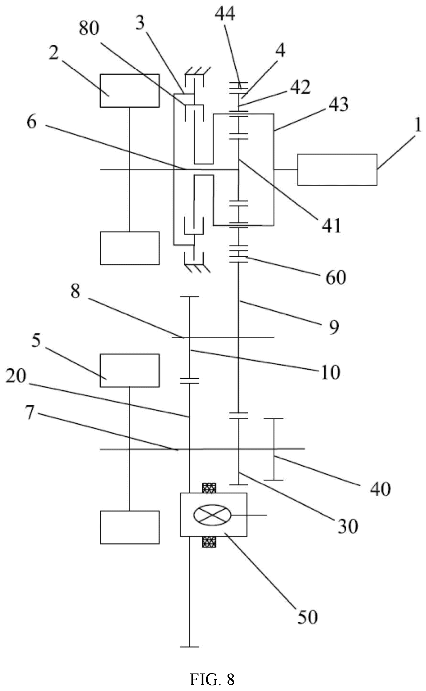

FIG. 8 shows a hybrid drive system provided in a fourth embodiment of the present application. The fourth embodiment is different from the first embodiment in that: the hybrid drive system further includes a third engagement/disengagement device 80, wherein the third engagement/disengagement device 80 is located between the second end of the first engagement/disengagement device 3 and the planet carrier 43.

The engagement/disengagement of the third engagement/disengagement device 80 enables the connection/disconnection between the planet carrier 43 and the sun gear 41. When the third engagement/disengagement device 80 is engaged, the planet carrier 43 is connected with the sun gear 41, the planet gear mechanism 4 is rotated as a whole, and the speed ratio of the planet gear mechanism 4 is 1. When the third engagement/disengagement device 80 is disengaged, the planet carrier 43 is disconnected from the sun gear 41, and the speed ratio of the planet gear mechanism 4 is not 1.

In this embodiment, the hybrid drive system has a pure electric drive mode, a power split mode, a parallel hybrid 1st-gear mode, a parallel hybrid 2nd-gear mode, an engine direct drive 1st-gear mode, an engine direct drive 2nd-gear mode, and a parking power generation mode.

In response to the first engagement/disengagement device 3 being disengaged, the third engagement/disengagement device 80 being disengaged, the second motor 5 being driven, and the engine 1 and the first motor 2 being not operated, the hybrid drive system enters the pure electric drive mode.

In response to the first engagement/disengagement device 3 being disengaged, the third engagement/disengagement device 80 being disengaged, the engine 1 driving the first motor 2 to generate electric power while being driven, the electric power generated by the first motor 2 being fully or partially provided to the second motor 5, and the second motor 5 being driven, the hybrid drive system enters the power split mode.

In response to the first engagement/disengagement device 3 being disengaged, the third engagement/disengagement device 80 being engaged (the planet gear mechanism 4 being rotated as a whole), the engine 1 being driven, the second motor 5 being driven or generating electric power, and the first motor 2 being driven, generating electric power or idling, the hybrid drive system enters the parallel hybrid 1st-gear mode. In response to the first engagement/disengagement device 3 being engaged, the third engagement/disengagement device 80 being disengaged, the engine 1 being driven, the second motor 5 being driven or generating electric power, and the first motor 2 being not operated, the hybrid drive system enters parallel hybrid 2nd-gear mode.

In response to the first engagement/disengagement device 3 being disengaged, the third engagement/disengagement device 80 being engaged, the engine 1 being driven, the first motor 2 idling, and the second motor 5 idling, the hybrid drive system enters the engine direct drive 1st-gear mode. In response to the first engagement/disengagement device 3 being engaged, the third engagement/disengagement device 80 being disengaged, the engine 1 being driven, the first motor 2 being not operated, and the second motor 5 idling, the hybrid drive system enters the engine direct drive 2nd-gear mode.

When the vehicle is parked, in response to the parking gear 30 being locked, the first engagement/disengagement device 3 being disengaged, the third engagement/disengagement device 80 being disengaged, the second motor 5 being not operated, and the engine 1 driving the first motor 2 to generate electric power, the hybrid drive system enters the parking power generation mode.

The parallel hybrid mode includes a parallel 1st-gear assist mode, a parallel 1st-gear power generation mode, a parallel 2nd-gear assist mode, and a parallel 2nd-gear power generation mode, where: in response to the first engagement/disengagement device 3 being disengaged, the third engagement/disengagement device 80 being engaged, the engine 1 being driven, the second motor 5 being driven, and the first motor 2 being driven, generating electric power or idling, the hybrid drive system enters the parallel 1st-gear assist mode; in response to the first engagement/disengagement device 3 being disengaged, the third engagement/disengagement device 80 being engaged, the engine 1 being driven, the second motor 5 generating electric power, and the first motor 2 being driven, generating electric power or idling, the hybrid drive system enters the parallel 1st-gear power generation mode; in response to the first engagement/disengagement device 3 being engaged, the third engagement/disengagement device 80 being disengaged, the engine 1 being driven, the second motor 5 being driven, and the first motor 2 being not operated, the hybrid drive system enters the parallel 2nd-gear assist mode; and in response to the first engagement/disengagement device 3 being engaged, the third engagement/disengagement device 80 being disengaged, the engine 1 being driven, the second motor 5 generating electric power, and the first motor 2 being not operated, the hybrid drive system enters the parallel 2nd-gear power generation mode.

The hybrid drive system has a braking energy recovery modes in the pure electric drive mode, a braking energy recovery mode in the power split mode, a braking energy recovery mode in the parallel hybrid 1st-gear mode, a braking energy recovery mode in the parallel hybrid 2nd-gear mode, a braking energy recovery mode in the engine direct drive 1st-gear mode, and a braking energy recovery mode in the engine direct drive 2nd-gear mode.

When the vehicle is braked in the pure electric drive mode, in response to the first engagement/disengagement device 3 being disengaged, the third engagement/disengagement device 80 being disengaged, the second motor 5 being subjected to reverse torque to decelerate and generate electric power, and the engine 1 and the first motor 2 being not operated, the hybrid drive system enters the braking energy recovery mode in the pure electric drive mode.

When the vehicle is braked in the power split mode, in response to the first engagement/disengagement device 5 being disengaged, the third engagement/disengagement device 80 being disengaged, the second motor 5 being subjected to reverse torque to decelerate and generate electric power, and the engine 1 driving the first motor 2 to generate electric power while being driven, the hybrid drive system enters the braking energy recovery mode in the power split mode.

When the vehicle is braked in the parallel hybrid 1st-gear mode, in response to the first engagement/disengagement device 3 being disengaged, the third engagement/disengagement device 80 being engaged, the engine 1 being driven, the second motor 5 being subjected to reverse torque to decelerate and generate electric power, and the first motor 2 being driven, generating electric power or idling, the hybrid drive system enters the braking energy recovery mode in the parallel hybrid 1st-gear mode.

When the vehicle is braked in the parallel hybrid 2nd-gear mode, in response to the first engagement/disengagement device 3 being engaged, the third engagement/disengagement device 80 being disengaged, the engine 1 being driven, the second motor 5 being subjected to reverse torque to decelerate and generate electric power, and the first motor 2 being not operated, the hybrid drive system enters the braking energy recovery mode in the parallel hybrid 2nd-gear mode.

When the vehicle is braked in the engine direct drive 1st-gear mode, in response to the first engagement/disengagement device 3 being disengaged, the third engagement/disengagement device 80 being engaged, the engine 1 being driven, the second motor 5 being subjected to reverse torque to decelerate and generate electric power, and the first motor 2 generating electric power or idling, the hybrid drive system enters the braking energy recovery mode in the engine direct drive 1st-gear mode.

When the vehicle is braked in the engine direct drive 2nd-gear mode, in response to the first engagement/disengagement device 3 being engaged, the third engagement/disengagement device 80 being disengaged, the engine 1 being driven, the second motor 5 being subjected to reverse torque to decelerate and generate electric power, and the first motor 2 being not operated, the hybrid drive system enters the braking energy recovery mode in the engine direct drive 2nd-gear mode.

In this embodiment, see Table 4 below for the control in each drive mode:

**Table 4**

| Drive modes | Engine | First motor | Second motor | First engagement/ disengagement device | Third engagement/ disengagement device |
|---|---|---|---|---|---|
| Pure electric drive mode | / | / | Being driven | Being disengaged | Being disengaged |
| Power split mode | Being driven | Generating electric power | Being driven | Being disengaged | Being disengaged |
| Parallel hybrid 1st-gear mode | Being driven | Being driven, generating electric power or idling | Being driven | Being disengaged | Being engaged |
| Parallel hybrid 2nd-gear mode | Being driven | / | Being driven | Being engaged | Being disengaged |
| Engine direct drive 1st-gear mode | Being driven | Idling | Idling | Being disengaged | Being engaged |
| Engine direct drive 2nd-gear mode | Being driven | / | Idling | Being engaged | Being disengaged |
| Braking energy recovery mode in the pure electric drive mode | / | / | Generating electric power | Being disengaged | Being disengaged |
| Braking energy recovery mode in the power split mode | Being driven | Generating electric power | Generating electric power | Being disengaged | Being disengaged |
| Parallel hybrid 1st-gear mode in braking energy recovery mode | Being driven | Being driven, generating electric power or idling | Generating electric power | Being disengaged | Being engaged |
| Parallel hybrid 2nd-gear mode in braking energy recovery mode | Being driven | / | Generating electric power | Being engaged | Being disengaged |
| Braking energy recovery mode in engine direct drive 1st-gear mode | Being driven | Generating electric power or idling | Generating electric power | Being disengaged | Being engaged |
| Braking energy recovery mode in engine direct drive 2nd-gear mode | Being driven | / | Generates electric power | Being engaged | Being disengaged |
| Parking power generation mode | Being driven | Generating electric power | / | Being disengaged | Being disengaged |

In Table 4, "/" indicates "not operated".

### Fifth embodiment

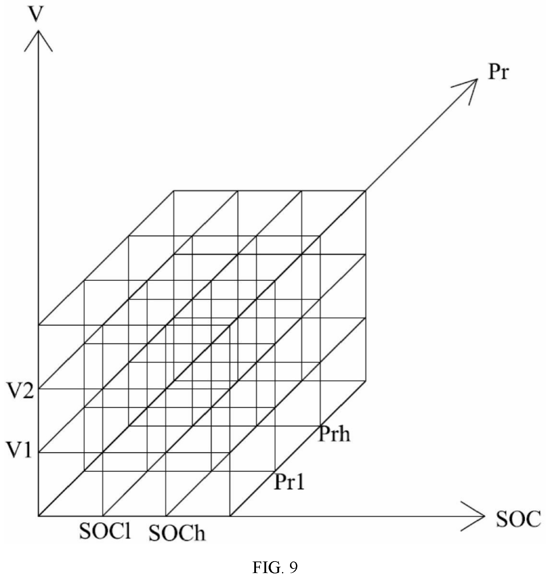

Referring to FIGS. 9 to 12, a fifth embodiment of the present application further provides a drive system control method, which, based on the hybrid drive system in the fourth embodiment, is different from the drive system control method in the third embodiment in that:
The operating mode layering distribution model has three layers, a layering condition for the first layer and the second layer of the operating mode layering distribution model is V10 < V1, and a layering condition for the second layer and the third layer of the operating mode layering distribution model is V20 > V2; the parallel hybrid mode includes a parallel hybrid 1st-gear mode and a parallel hybrid 2nd-gear mode, and the engine direct drive mode includes an engine direct drive 1st-gear mode and an engine direct drive 2nd-gear mode; the first layer of the operating mode layering distribution model is distributed with the power split mode and the pure electric drive mode, the second layer of the operating mode layering distribution model is distributed with the pure electric drive mode, the parallel hybrid 1st-gear mode and the engine direct drive 1st-gear mode, and the third layer of the operating mode layering distribution model is distributed with the pure electric drive mode, the parallel hybrid 2nd-gear mode and the engine direct drive 2nd-gear mode, wherein V20 represents a first vehicle speed threshold, V2 represents a second vehicle speed threshold, V10 represents a third vehicle speed threshold, and V1 represents a fourth vehicle speed threshold. The vehicle speed thresholds are preset based on experience, and then V20, V10, V1, and V2 are calibrated through subsequent vehicle adjustment.

In addition, an embodiment of the present application further provides a vehicle that includes the hybrid power drive system in the above embodiment.

Various embodiments of the present application have been described above. The above description is exemplary and not exhaustive, and is not limited to the disclosed embodiments. Many modifications and replacements will be apparent to the ordinary technicians in the technical field without departing from the scope and spirit of the described embodiments. The terminology used herein is chosen to best explain the principles, practical applications, or technological improvements in the market of the various embodiments, or to enable other ordinary technicians in the technical field to understand the embodiments disclosed herein.

## Claims

1. A hybrid drive system, **characterized by** comprising: an engine, a first motor, a first engagement/disengagement device, a planet gear mechanism, a second motor, a first shaft, a second shaft, an intermediate shaft, an intermediate shaft gear, a main reducer driving gear, a main reducer driven gear, a motor drive gear, a parking gear and a differential, wherein the intermediate shaft gear and the main reducer driving gear are disposed on the intermediate shaft, the main reducer driven gear is disposed on a housing of the differential and is meshed with the main reducer driving gear, the motor drive gear and the parking gear are disposed on the second shaft, the motor drive gear is meshed with the intermediate shaft gear, and one end of the second shaft is connected to a rotor of the second motor; and a vehicle is parked by locking the parking gear;
the planet gear mechanism comprises a sun gear, planet gears, a planet carrier and a gear ring, wherein the first shaft is connected between a rotor of the first motor and the sun gear, the engine is connected to the planet carrier, and the gear ring is provided with an external gear of the gear ring meshed with the intermediate shaft gear; and
the first engagement/disengagement device is connected between the sun gear and a stationary component for selectively engaging/disengaging the sun gear with/from the stationary component.

2. The hybrid drive system according to claim 1, wherein the first shaft, the second shaft and the intermediate shaft are arranged in parallel one another at intervals.

3. The hybrid drive system according to claim 2, wherein the first motor and the engine are located on opposite axial sides of the first shaft, and the second motor and the first motor are located on the same axial side of the first shaft.

4. The hybrid drive system according to claim 1, wherein the first motor, the first engagement/disengagement device, the planet gear mechanism and the engine are arranged sequentially in an axial direction of the first shaft.

5. The hybrid drive system according to claim 1, wherein the second motor, the motor drive gear and the parking gear are arranged sequentially in an axial direction of the second shaft.

6. The hybrid drive system according to claim 1, wherein a diameter of the motor drive gear is less than a diameter of the intermediate shaft gear; and
a diameter of the external gear of the gear ring is less than the diameter of the intermediate shaft gear.

7. The hybrid drive system according to claim 1, wherein a first end of the first engagement/disengagement device is connected to the stationary component, and a second end of the first engagement/disengagement device is connected to the first shaft.

8. The hybrid drive system according to claim 1, wherein the hybrid drive system has a pure electric drive mode, a power split mode, a parallel hybrid mode, an engine direct drive mode, and a parking power generation mode, wherein:
in response to the first engagement/disengagement device being disengaged, the second motor being driven, and the engine and the first motor being not operated, the hybrid drive system enters the pure electric drive mode;
in response to the first engagement/disengagement device being disengaged, the engine driving the first motor to generate electric power while being driven, the electric power generated by the first motor being fully or partially provided to the second motor, and the second motor being driven, the hybrid drive system enters the power split mode;
in response to the first engagement/disengagement device being engaged, the engine being driven, the second motor being driven or generating electric power, and the first motor being not operated, the hybrid drive system enters the parallel hybrid mode;
in response to the first engagement/disengagement device being engaged, the engine being driven, the first motor being not operated, and the second motor idling, the hybrid drive system enters the engine direct drive mode; and
when the vehicle is parked, in response to the parking gear being locked, the first engagement/disengagement device being disengaged, the second motor being not operated, and the engine driving the first motor to generate electric power, the hybrid drive system enters the parking power generation mode.

9. The hybrid drive system according to claim 8, wherein the parallel hybrid mode comprises a parallel assist mode and a parallel power generation mode, wherein:
in response to the first engagement/disengagement device being engaged, the engine being driven, the second motor being driven, and the first motor being not operated, the hybrid drive system enters the parallel assist mode; and
in response to the first engagement/disengagement device being engaged, the engine being driven, the second motor generating electric power, and the first motor being not operated, the hybrid drive system enters the parallel power generation mode.

10. The hybrid drive system according to claim 8, wherein the hybrid drive system has a braking energy recovery mode in the pure electric drive mode, a braking energy recovery mode in the power split mode, a braking energy recovery mode in the parallel hybrid mode, and a braking energy recovery mode in the engine direct drive mode, wherein:
when the vehicle is braked in the pure electric drive mode, in response to the first engagement/disengagement device being disengaged, the second motor being subjected to reverse torque to decelerate and generate electric power, and the engine and the first motor being not operated, the hybrid drive system enters the braking energy recovery mode in the pure electric drive mode;
when the vehicle is braked in the power split mode, in response to the first engagement/disengagement device being disengaged, the second motor being subjected to reverse torque to decelerate and generate electric power, and the engine driving the first motor to generate electric power while being driven, the hybrid drive system enters the braking energy recovery mode in the power split mode;
when the vehicle is braked in the parallel hybrid mode, in response to the first engagement/disengagement device being engaged, the second motor being subjected to reverse torque to decelerate and generate electric power, the engine being driven, and the first motor being not operated, the hybrid drive system enters the braking energy recovery mode in the parallel hybrid mode; and
when the vehicle is braked in the engine direct drive mode, in response to the first engagement/disengagement device being engaged, the second motor being subjected to reverse torque to decelerate and generate electric power, the engine being driven, and the first motor being not operated, the hybrid drive system enters the braking energy recovery mode in the engine direct drive mode.

11. The hybrid drive system according to claim 7, further comprising: a second engagement/disengagement device, wherein the first shaft comprises a first shaft segment and a second shaft segment that are coaxial and spaced apart from each other, the first end of the first engagement/disengagement device is connected to the stationary component, one end of the first shaft segment is connected to the rotor of the first motor, the second engagement/disengagement device is connected between the other end of the first shaft segment and the second end of the first engagement/disengagement device, and the second shaft segment is connected between the second end of the first engagement/disengagement device and the sun gear.

12. The hybrid drive system according to claim 11, wherein the hybrid drive system has a pure electric drive mode, a power split mode, a parallel hybrid mode, an engine direct drive mode, and a parking power generation mode, wherein:
in response to the first engagement/disengagement device being disengaged, the second engagement/disengagement device being disengaged, the second motor being driven, and the engine and the first motor being not operated, the hybrid drive system enters the pure electric drive mode;
in response to the first engagement/disengagement device being disengaged, the second engagement/disengagement device being engaged, the engine driving the first motor to generate electric power while being driven, the electric power generated by the first motor being fully or partially provided to the second motor, and the second motor being driven, the hybrid drive system enters the power split mode;
in response to the first engagement/disengagement device being engaged, the second engagement/disengagement device being disengaged, the engine being driven, the second motor being driven or generating electric power, and the first motor being not operated, the hybrid drive system enters the parallel hybrid mode;
in response to the first engagement/disengagement device being engaged, the second engagement/disengagement device being disengaged, the engine being driven, the first motor being not operated, and the second motor idling, the hybrid drive system enters the engine direct drive mode; and
when the vehicle is parked, in response to the parking gear being locked, the first engagement/disengagement device being disengaged, the second engagement/disengagement device being engaged, the second motor being not operated, and the engine driving the first motor to generate electric power, the hybrid drive system enters the parking power generation mode.

13. The hybrid drive system according to claim 12, wherein the parallel hybrid mode comprises a parallel assist mode and a parallel power generation mode, wherein:
in response to the first engagement/disengagement device being engaged, the second engagement/disengagement device being disengaged, the engine being driven, the second motor being driven, and the first motor being not operated, the hybrid drive system enters the parallel assist mode; and
in response to the first engagement/disengagement device being engaged, the second engagement/disengagement device being disengaged, the engine being driven, the second motor generating electric power, and the first motor being not operated, the hybrid drive system enters the parallel power generation mode.

14. The hybrid drive system according to claim 12, wherein the hybrid drive system has a braking energy recovery mode in the pure electric drive mode, a braking energy recovery mode in the power split mode, a braking energy recovery mode in the parallel hybrid mode, and a braking energy recovery mode in the engine direct drive mode, wherein:
when the vehicle is braked in the pure electric drive mode, in response to the first engagement/disengagement device being disengaged, the second engagement/disengagement device being disengaged, the second motor being subjected to reverse torque to decelerate and generate electric power, and the engine and the first motor being not operated, the hybrid drive system enters the braking energy recovery mode in the pure electric drive mode;
when the vehicle is braked in the power split mode, in response to the first engagement/disengagement device being disengaged, the second engagement/disengagement device being engaged, the second motor being subjected to reverse torque to decelerate and generate electric power, and the engine driving the first motor to generate electric power while being driven, the hybrid drive system enters the braking energy recovery mode in the power split mode;
when the vehicle is braked in the parallel hybrid mode, in response to the first engagement/disengagement device being engaged, the second engagement/disengagement device being disengaged, the second motor being subjected to reverse torque to decelerate and generate electric power, the engine being driven, and the first motor being not operated, the hybrid drive system enters the braking energy recovery mode in the parallel hybrid mode; and
when the vehicle is braked in the engine direct drive mode, in response to the first engagement/disengagement device being engaged, the second engagement/disengagement device being disengaged, the second motor being subjected to reverse torque to decelerate and generate electric power, the engine being driven, and the first motor being not operated, the hybrid drive system enters the braking energy recovery mode in the engine direct drive mode.

15. The hybrid drive system according to claim 7, further comprising: a third engagement/disengagement device, wherein the third engagement/disengagement device is connected between the second end of the first engagement/disengagement device and the planet carrier.

16. The hybrid drive system according to claim 15, wherein the hybrid drive system has a pure electric drive mode, a power split mode, a parallel hybrid 1st-gear mode, a parallel hybrid 2nd-gear mode, an engine direct drive 1st-gear mode, an engine direct drive 2nd-gear mode, and a parking power generation mode, wherein:
in response to the first engagement/disengagement device being disengaged, the third engagement/disengagement device being disengaged, the second motor being driven, and the engine and the first motor being not operated, the hybrid drive system enters the pure electric drive mode;
in response to the first engagement/disengagement device being disengaged, the third engagement/disengagement device being disengaged, the engine driving the first motor to generate electric power while being driven, the electric power generated by the first motor being fully or partially provided to the second motor, and the second motor being driven, the hybrid drive system enters the power split mode;
in response to the first engagement/disengagement device being disengaged, the third engagement/disengagement device being engaged, the engine being driven, the second motor being driven or generating electric power, and the first motor being driven, generating electric power or idling, the hybrid drive system enters the parallel hybrid 1st-gear mode;
in response to the first engagement/disengagement device being engaged, the third engagement/disengagement device being disengaged, the engine being driven, the second motor being driven or generating electric power, and the first motor being not operated, the hybrid drive system enters parallel hybrid 2nd-gear mode;
in response to the first engagement/disengagement device being disengaged, the third engagement/disengagement device being engaged, the engine being driven, the first motor idling, and the second motor idling, the hybrid drive system enters the engine direct drive 1st-gear mode;
in response to the first engagement/disengagement device being engaged, the third engagement/disengagement device being disengaged, the engine being driven, the first motor being not operated, and the second motor idling, the hybrid drive system enters the engine direct drive 2nd-gear mode; and
when the vehicle is parked, in response to the parking gear being locked, the first engagement/disengagement device being disengaged, the third engagement/disengagement device being disengaged, the second motor being not operated, and the engine driving the first motor to generate electric power, the hybrid drive system enters the parking power generation mode.

17. The hybrid drive system according to claim 16, wherein the parallel hybrid mode comprises a parallel 1st-gear assist mode, a parallel 1st-gear power generation mode, a parallel 2nd-gear assist mode, and a parallel 2nd-gear power generation mode, wherein:
in response to the first engagement/disengagement device being disengaged, the third engagement/disengagement device being engaged, the engine being driven, the second motor being driven, and the first motor being driven, generating electric power or idling, the hybrid drive system enters the parallel 1st-gear assist mode;
in response to the first engagement/disengagement device being disengaged, the third engagement/disengagement device being engaged, the engine being driven, the second motor generating electric power, and the first motor being driven, generating electric power or idling, the hybrid drive system enters the parallel 1st-gear power generation mode;
in response to the first engagement/disengagement device being engaged, the third engagement/disengagement device being disengaged, the engine being driven, the second motor being driven, and the first motor being not operated, the hybrid drive system enters the parallel 2nd-gear assist mode; and
in response to the first engagement/disengagement device being engaged, the third engagement/disengagement device being disengaged, the engine being driven, the second motor generating electric power, and the first motor being not operated, the hybrid drive system enters parallel 2nd-gear power generation mode.

18. The hybrid drive system according to claim 16, wherein the hybrid drive system has a braking energy recovery mode in the pure electric drive mode, a braking energy recovery mode in the power split mode, a braking energy recovery mode in the parallel hybrid 1st-gear mode, a braking energy recovery mode in the parallel hybrid 2nd-gear mode, a braking energy recovery mode in the engine direct drive 1st-gear mode, and a braking energy recovery mode in the engine direct drive 2nd-gear mode, wherein:
when the vehicle is braked in the pure electric drive mode, in response to the first engagement/disengagement device being disengaged, the third engagement/disengagement device being disengaged, the second motor being subjected to reverse torque to decelerate and generate electric power, and the engine and the first motor being not operated, the hybrid drive system enters the braking energy recovery mode in the pure electric drive mode;
when the vehicle is braked in the power split mode, in response to the first engagement/disengagement device being disengaged, the third engagement/disengagement device being disengaged, the second motor being subjected to reverse torque to decelerate and generate electric power, and the engine driving the first motor to generate electric power while being driven, the hybrid drive system enters the braking energy recovery mode in the power split mode;
when the vehicle is braked in the parallel hybrid 1st-gear mode, in response to the first engagement/disengagement device being disengaged, the third engagement/disengagement device being engaged, the engine being driven, the second motor being subjected to reverse torque to decelerate and generate electric power, and the first motor being driven, generating electric power or idling, the hybrid drive system enters the braking energy recovery mode in the parallel hybrid 1st-gear mode;
when the vehicle is braked in the parallel hybrid 2nd-gear mode, in response to the first engagement/disengagement device being engaged, the third engagement/disengagement device being disengaged, the engine being driven, the second motor being subjected to reverse torque to decelerate and generate electric power, and the first motor being not operated, the hybrid drive system enters the braking energy recovery mode in the parallel hybrid 2nd-gear mode;
when the vehicle is braked in the engine direct drive 1st-gear mode, in response to the first engagement/disengagement device being disengaged, the third engagement/disengagement device being engaged, the engine being driven, the second motor being subjected to reverse torque to decelerate and generate electric power, and the first motor generating electric power or idling, the hybrid drive system enters the braking energy recovery mode in the engine direct drive 1st-gear mode; and
when the vehicle is braked in the engine direct drive 2nd-gear mode, in response to the first engagement/disengagement device being engaged, the third engagement/disengagement device being disengaged, the engine being driven, the second motor being subjected to reverse torque to decelerate and generate electric power, and the first motor being not operated, the hybrid drive system enters the braking energy recovery mode in the engine direct drive 2nd-gear mode.

19. A vehicle, **characterized by** comprising: the hybrid power drive system of any one of claims 1-18.

20. A drive system control method, based on the hybrid drive system of any one of claims 1-18, **characterized by** comprising:
establishing an operating mode layering distribution model of the hybrid drive system, wherein the hybrid drive system at least has a pure electric drive mode, a power split mode, a parallel hybrid mode and an engine direct drive mode; and
performing switching between the pure electric drive mode, the power split mode, the parallel hybrid mode and the engine direct drive mode according to the operating mode layering distribution model.

21. The drive system control method according to claim 20, wherein the operating mode layering distribution model has two layers, and a layering condition for the first layer and the second layer of the operating mode layering distribution model is V20 < V2, wherein V20 represents a first vehicle speed threshold, and V2 represents a second vehicle speed threshold; and
the first layer of the operating mode layering distribution model is distributed with the power split mode and the pure electric drive mode, and the second layer of the operating mode layering distribution model is distributed with the pure electric drive mode, the parallel hybrid mode and the engine direct drive mode.

22. The drive system control method according to claim 20, wherein the operating mode layering distribution model has three layers, a layering condition for the first layer and the second layer of the operating mode layering distribution model is V10<V1, and a layering condition for the second layer and the third layer of the operating mode layering distribution model is V20>V2, wherein V20 represents a first vehicle speed threshold, V2 represents a second vehicle speed threshold, V10 represents a third vehicle speed threshold, and V1 represents a fourth vehicle speed threshold;
the parallel hybrid mode comprises a parallel hybrid 1st-gear mode and a parallel hybrid 2nd-gear mode, and the engine direct drive mode comprises an engine direct drive 1st-gear mode and an engine direct drive 2nd-gear mode; and
the first layer of the operating mode layering distribution model is distributed with the power split mode and the pure electric drive mode, the second layer of the operating mode layering distribution model is distributed with the pure electric drive mode, the parallel hybrid 1st-gear mode and the engine direct drive 1st-gear mode, and the third layer of the operating mode layering distribution model is distributed with the pure electric drive mode, the parallel hybrid 2nd-gear mode and the engine direct drive 2nd-gear mode.

23. The drive system control method according to claim 20, further comprising:
providing a buffer zone on a switching path of each operating mode, and providing a buffer zone on an ON/OFF switching path of the engine.

24. The drive system control method according to claim 20, further comprising:
monitoring a state of charge (SOC) of a battery pack in real time;
when the current SOC of the battery pack is higher than a set upper limit SOCh and the entire vehicle required power Pr is lower than a set lower limit Prl, controlling the engine not to operate, such that the battery pack provides electric power to the second motor alone to drive the entire vehicle to run;
when the current SOC of the battery pack is lower than a set lower limit SOCl, or the current SOC of the battery pack is between the set upper and lower limits SOCh and SOCl and the entire vehicle required power Pr is between the set upper and lower limits Prh and Prl, or the entire vehicle required power Pr is higher than the set upper limit Prh, controlling the engine to operate, such that the engine drives the entire vehicle to run as a main power source; and
when the current SOC of the battery pack is higher than the set upper limit SOCh and the entire vehicle required power Pr is between the set upper and lower limits Prh and Prl, or the current SOC of the battery pack is between the set upper and lower limits SOCh and SOCl and the entire vehicle required power Pr is lower than the set lower limit Prl, providing a transition zone, such that an operating mode of the hybrid drive system is kept as that of the previous moment.

25. The drive system control method according to claim 24, further comprising:
in the power split mode of the hybrid drive system, when the engine required power Per is lower than the minimum power Pemin on a minimum fuel consumption line of the engine, controlling the engine to operate at a power point with the minimum power Pemin; when the engine required power Per is higher than the maximum power Pemax on the minimum fuel consumption line of the engine, controlling the engine to operate at a power point with the maximum power Pemax; and when the engine required power Per is between the maximum power Pemax and the minimum power Pemin on the minimum fuel consumption line of the engine, controlling the engine to operate on the minimum fuel consumption line of the engine, wherein the engine required power Per is equal to the entire vehicle required power Pr + loss power + accessory power.

26. The drive system control method according to claim 24, further comprising:
in the engine direct drive mode or the parallel hybrid mode, when the engine required power Per is lower than the minimum power Pemin on a minimum fuel consumption line of the engine, controlling the engine to operate at a power point with the minimum power Pemin; when the engine required power Per is higher than the maximum power Pemax on the minimum fuel consumption line of the engine, controlling the engine to operate at a power point with the maximum power Pemax; and when the engine required power Per is between the maximum power Pemax and the minimum power Pemin on the minimum fuel consumption line of the engine, controlling the engine to operate on a minimum fuel consumption line Peopt of the engine, wherein the engine required power Per is equal to the entire vehicle required power Pr + loss power + accessory power; and
when the engine required power Per is higher than the maximum power Pemax on the minimum fuel consumption line Peopt of the engine and the current SOC of the battery pack is greater than the set lower limit SOCl, switching the hybrid drive system to the parallel assist mode of the parallel hybrid mode; and when the engine required power Per is lower than the minimum power Pemin on theminimum fuel consumption line Peopt of the engine and the current SOC is less than the set upper limit SOCh, switching the hybrid drive system to the parallel power generation mode of the parallel hybrid mode.
